# EUROPEAN PATENT APPLICATION

(11) **EP 0 845 628 A1**
(43) Date of publication of application: **03.06.1998**
(21) Application number: 97117659.9
(22) Date of filing: 11.10.1997
(51) Int. Cl.: F16L 41/00, F16L 41/08, E03F 3/04

(54) **A pipe coupling**

(30) Priority: 29.11.1996 SE 9604411
(71) Applicant: Forsheda AB, S-330 12 Forsheda (SE)
(72) Inventor: de la Llave, Claude, F-17000 La Rochelle (FR); Ström, Anders, S-331 34 Värnamo (SE)
(74) Representative: Linde, Leif

(57) **Abstract**

A pipe coupling for connecting a pipe end portion (2) to a wall (4) formed with a bore (6), for example a manhole wall consisting of concrete, comprising a substantially rigid sleeve (8) having an outer surface connected with the bore (6) in the wall (4) and an inner surface connected with the pipe end portion (2). A sealing device (20) is positioned between the outer surface of the sleeve and the surface defining the bore in the wall. A further sealing device (24) is positioned between the inner surface of the sleeve and the outer surface of the pipe end portion.

## Description

The present invention relates to a pipe coupling for connecting a pipe end portion with a bore formed in a wall, for example the wall of a manhole.

When connecting a pipe line to a manhole there are used different kinds of couplings and sealing devices for providing a tight connection of the end portion of the pipe line with the bore formed in the wall of the manhole. Previously known coupling and sealing devices are either very complicated and expensive or difficult to use and unsatisfactory with regard to their function. With regard to the function it is important that the coupling and sealing devices shall have the capacity of taking up movements between the pipe line and the manhole with regard to varying angular positions between the pipe line and the manhole and with regard to axial displacements of the pipe line in relation to the manhole. Such displacements often appear as a consequence of settlings, ground movements because of erosion, earthquakes and the like. These ground movements must thereby not provide that the pipe line or the manhole or the connection between the pipe line and the manhole are damaged because of the fact that the connection between the pipe line and the manhole lacks capacity of adapting to said ground movements.

In accordance therewith it is an object of the invention to provide a pipe coupling of said kind which is easy and cheap to manufacture, is easy to mount and has the capacity of taking up the above discussed relative movements between the manhole and the pipe line.

In order to comply with this object the pipe coupling according to the invention is characterized in that the coupling comprises a substantially rigid sleeve having an outer surface connected with the bore of the wall and an inner surface connected with the pipe end portion, sealing devices being positioned between the outer surface of the sleeve and the surface defining the bore on one hand and between the inner surface of the sleeve and the outer surface of the pipe end portion on the other hand.

In a preferred embodiment of the pipe coupling according to the invention the pipe end portion is displaceable in its axial direction in said sleeve. Suitably the sleeve is provided with a stop face device positioned in the sleeve so as to define the position of the pipe end portion in the sleeve in the axial direction when the pipe end portion is introduced into the sleeve, the stop face device being adapted to be inactivated subsequently to the determination of the position of the pipe end portion in the sleeve. The inactivation of the stop face device can be provided in different ways, for example by the fact that the stop face device is constituted by an annular element which subsequently to the determination of the position of the pipe end portion in relation to the sleeve can be taken away from the sleeve. It is possible also to design the stop face device so that it is broken when it is subjected to more substantial axial stresses from the pipe end portion, for example as a consequence of ground movements. A further possibility is to manufacture the stop face device from a degradable material, which for example is dissolved by the medium floating through the pipe coupling.

It is suitable that the sleeve is at least in one of the axial directions fixed in the bore in the wall which can be provided by the fact that the sleeve supports an element engaging the surface of the wall surrounding the bore therein at one side of the wall. Thereby said engagement element can be constituted by an edge flange of the sleeve or by an annularly projecting portion of the sealing device positioned between the outer surface of the sleeve and the surface surrounding the bore in the wall.

In certain cases it is suitable that the sleeve is fixed in the bore in the wall in both axial directions, and thereby the sleeve can in one direction be fixed by means of a projecting portion of the kind described above and can in the other direction be fixed by means of a locking ring positioned between a shoulder of the sleeve and the surface of the wall surrounding the bore in the wall. Suitably the locking ring is open and consist of an elastic material, so that the ring can be positioned between the shoulder and the surface of the wall surrounding the opening by being forced over the sleeve in radial direction.

A pipe coupling according to the invention is of simple construction, is easy to mount and fix to the pipe wall and is able to take up angle deviations and angle movements between the manhole and the pipe line and axial movements of the pipe line in relation to the manhole without causing damages to the pipe line or to the connection between the pipe line and the manhole.

The invention shall be described in the following with references to the accompanying drawings.

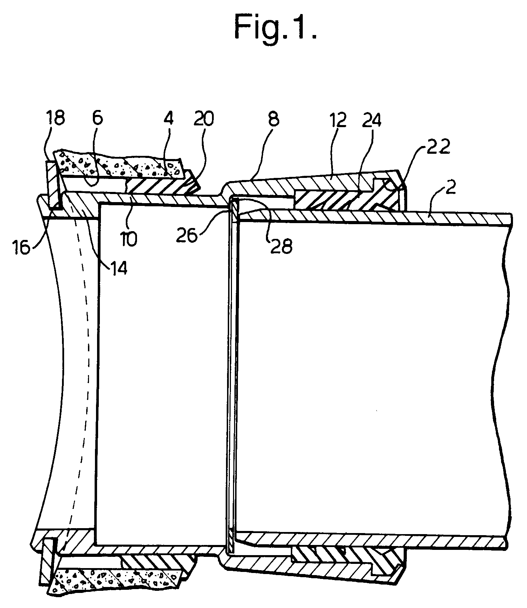

Figs. 1 - 4 are horizontal sections of different embodiments of a pipe coupling at the connection between a pipe end portion and the wall of a manhole.

The pipe coupling shown in horizontal section in Fig. 1 connects a pipe end portion 2 included in a pipe line with a bore 6 formed in the wall 4 of a manhole. The pipe coupling comprises a sleeve 8 consisting of plastic, for example polyvinyl chloride, the sleeve having a spigot end 10 adapted to be introduced into the bore 6 in the wall 4 of the manhole and a socket 12 adapted to receive the pipe end portion 2. At its free end portion the sleeve 8 has a thickened portion 14 formed with a peripherally extending groove 16 receiving the inner edge of an annular element 18. The annular element 18 can be used for locking the sleeve 8 in relation to the wall 4 of the manhole, and the thickened end portion 14 of the spigot end 10 and the groove 16 formed therein have such a design that they connect with the curved shape of the wall 4 of the manhole. Preferably the annular element 18 consists of plastic material, for example polyvinyl chloride, and is formed with a relatively wide slot in such a way, that the element encloses for example only 225° of a complete circle. Thereby the annular element 18 can be positioned in the groove 16 in substantially the same way as a Seeger locking ring, i.e. by being widened to increased diameter and being introduced into the groove into which it snaps into a locking position. Between the outer surface of the spigot end 10 and the surface defining the bore 6 of the manhole wall 4 there is provided a sealing ring 20 sealing the annular space between the surface defining the bore and the spigot end 10 of the sleeve 8.

The socket 12 of the sleeve 8 has an inner groove 22 receiving an annular projecting portion of a sealing ring 24 for sealing the space between the inner surface of the socket 12 and the outer surface of the pipe end portion 2.

In the sleeve 8 there is positioned a stop face device 26 constituted by a ring 26 engaging a shoulder 28 between the spigot end 10 and the socket 12. The ring 26 defines the relative position between the socket 8 and the pipe end portion when the pipe end portion is introduced into the socket 8. The stop face device constituted by the ring 26 is in accordance with the invention adapted to be inactivated after having completed its function as a stop face device for defining the position for introducting the spigot end 2 into the socket 8, so that the stop face device does not prevent continuing displacement of the pipe end portion 2 into the socket 8. Such displacement can be required if the pipe line to which the pipe end portion 2 is connected is subjected to ground movements. If the pipe end portion can thereby not be further displaced into the socket 8 the pipe line can be subjected to damages as the manhole to which the socket 8 is connected is substantially firmly arranged. In Fig. 1 the stop face device 26 is schematically shown as a ring, but it is realized that the stop face device 26 can in different ways be manufactured so that it does not prevent the axial displacement of the pipe end portion 2 as a consequence of ground movements having an influence on the pipe line which includes the pipe end portion 2 after having fulfilled its function for defining the position of the pipe end portion 2. For example the stop face device can be constituted by an annular element which subsequently to the determination of the position of the pipe end portion in the sleeve is removed therefrom. It is also possible to design the stop face device so that the device is broken when it is subjected to axial forces caused by ground movements or is manufactured from such a material that it is degraded after some time for example under the influence of the medium which is floating through the pipe coupling.

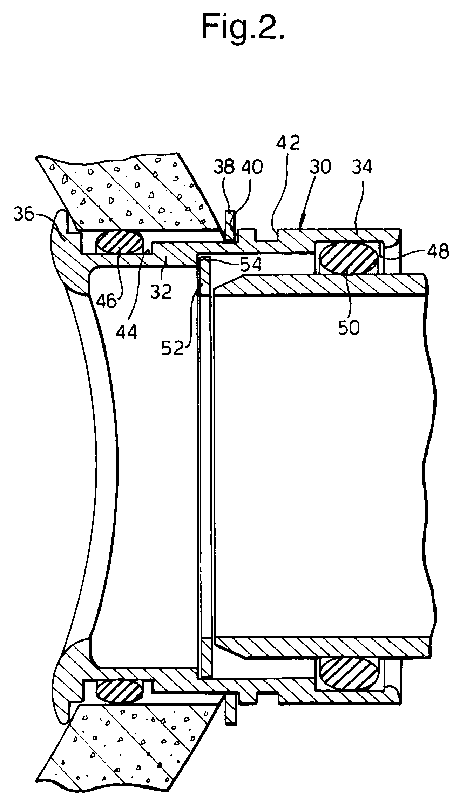

Also the pipe coupling shown in horizontal section in Fig. 2 connects a pipe end portion 2 of a pipe line with a bore 6 formed in a manhole wall 4. Also in this embodiment the pipe coupling comprises a sleeve 30 consisting of plastic, for example polyvinyl chloride, the sleeve having a spigot end 32 adapted to be introduced into the bore 6 in the manhole wall 4 and a socket 34 receiving the pipe end portion 2. The spigot end 32 of the sleeve 30 has at its free end a projecting, peripherally extending flange 36 connecting with the curved shape of the surface portion of the wall 4 surrounding the bore 6 and engages this surface portion so as to promote to the fixing of the axial position of the sleeve 30 in the bore 6. At the opposite outer side of the wall 4 the sleeve 30 supports a locking ring 38 which is intended to engage the surface portion of the wall surrounding the bore 6 in the wall 4. The locking ring 38 engages a shoulder 40 on the sleeve, and thereby the sleeve is in axial direction fixed with regard to its position in relation to the wall 4 by the engagement of the flange 36 and the locking ring 38 with the wall. Preferably the locking ring 38 consists of plastic material, for example polyvinyl chloride, and is formed with a relatively wide slot so that the element includes for example only 225° of a complete circle. Thus, the locking ring 38 acts like the element 18 of the embodiment according to Fig. 1 in the same way as a Seeger locking ring. The sleeve 30 is provided with a further shoulder 42 which can constitue an engagement surface for the locking ring 38 in the case that the sleeve 30 shall be connected with a wall having larger thickness.

The spigot end 32 of the sleeve 30 has a groove 44 for receiving a sealing ring 46 sealing the sleeve 30 in relation to the bore 6. Further the sleeve 30 has at its socket 34 an inner groove 48 receiving a sealing ring 50 for sealing the pipe end portion 2 in relation to the sleeve 30.

In the sleeve 30 there is provided a stop face device 52 of the same kind as the stop face device of the embodiment according to Fig. 1. The stop face device 52 defines the relative position between the sleeve 30 and the pipe end portion 2 when this is introduced into the sleeve 30. The stop face device 52 engages a shoulder 54 in the sleeve and is in the same way as in the embodiment according to Fig. 1 adapted to be inactivated when it has fulfilled its function as means for defining the position of the pipe end portion 2 so that the stop face device does not prevent axial displacement of the pipe end portion 2 in the sleeve 30 as a consequence of ground movements and the like.

The sleeve can in one and the same design be used for connection to openings 6 of different diameters and pipe end portions 2 of different diameters by choosing sealing rings of different radial dimensions. The sleeve 30 allows angular adjustment of the pipe end portion in relation to the bore 6 and consequently allows also axial displacement of the pipe end portion in the sleeve.

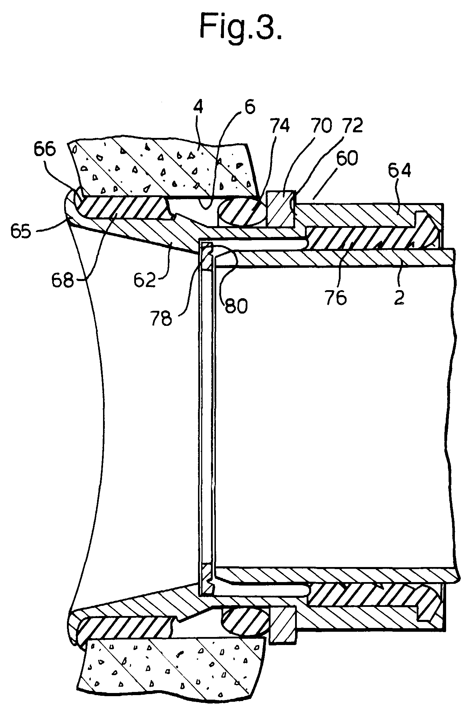

The pipe coupling shown in horizontal section in Fig. 3 comprises like the pipe couplings according to Fig. 1 and 2 a pipe end portion 2 which is connected with a bore 6 in a manhole wall 4. The pipe coupling comprises a sleeve 60 manufactured from plastic material and having a spigot end 62 adapted to be connected with the bore 6 in the manhole wall 4 and a socket 64 for receiving the pipe end portion 2. The spigot end 62 has an outwardly projection flange 65 supporting an annularly projecting portion 66 on a sealing ring 68 positioned between the outer surface of the spigot end 62 and the wall of the bore 6. The engagement of the annular projection 66 with the inner surface of the manhole wall 4 provides for an axial fixing of the sleeve 60 in relation to the wall 4 in one direction. The sleeve 60 is fixed in relation to the manhole wall 4 in the opposite direction by means of a locking ring 70 engaging a shoulder 72 on the sleeve 60, whereby the locking ring can be of the same design as the locking rings of the previously described embodiments of the pipe coupling according to the invention. In the embodiment of the pipe coupling shown in Fig. 3 the bore 60 is sealed at its inner surface by means of the sealing ring 68 as well as at its outer end by means of a sealing ring 74.

In the socket 64 of the sleeve 60 there is positioned a sealing ring 76 which by means of an annularly projecting portion 78 engages a peripherally extending groove in the socket 64. The sealing ring 76 seals the pipe end portion 2 which is introduced into the sleeve 60 in relation to the sleeve.

Like in the embodiments described above the sleeve 60 is provided with a stop face device 78 engaging a shoulder 80 of the sleeve and being of such a design that it can be used for determining the position of the pipe end portion 2 when this is introduced into the sleeve 60 but does not prevent subsequent displacement of the pipe end portion 2 into the sleeve as a consequence of for example ground movements.

The pipe coupling according to Fig. 3 presents the same advantages as the pipe couplings previously described with regard to its simple design and simple mounting as well as its possibility to relative movements between the wall 4 and the pipe end portion 2.

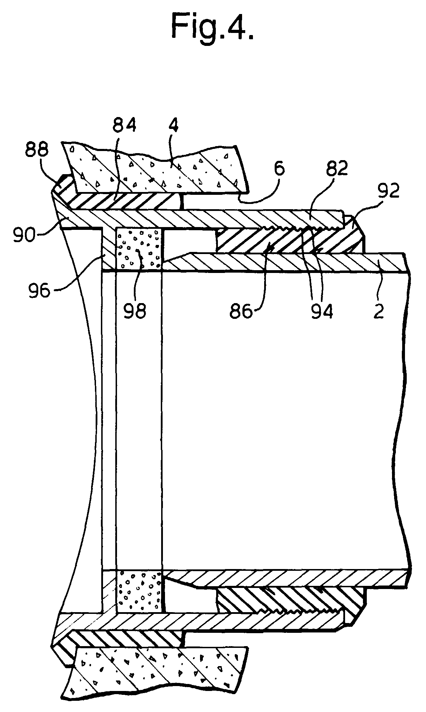

Also the embodiment of the pipe coupling according to the invention shown in Fig. 4 is shown in horizontal section and reveals the connection of a pipe end portion 2 with a manhole wall at a bore 6 provided therein.

The coupling comprises a pipe-shaped sleeve 82, a sealing ring 84 positioned between the outer surface of the sleeve and the wall of the bore 6 and a sealing ring 86 positioned between the inner surface of the sleeve 82 and the outer surface of the pipe end portion 2. The sealing ring 84 has a projecting, annular end portion 88 engaging the inner side of the manhole wall 4 around the opening 6 and supported by an outwardly directed edge flange 90 on the sleeve 82.

The sealing ring 86 is defined with regard to its position in relation to the sleeve 82 by the fact that the sealing ring engages by means of a projecting edge portion 92 the end surface of the sleeve and by the fact that the sleeve is at its inner surface provided with grooves and rims 94 engaging the elastic material of the sealing ring 86 and thereby fixing the sealing ring.

The sleeve 82 has an annular, inwardly directed projection 96 forming an engagement surface for a stop face device which is positioned in the sleeve 82 before the pipe end portion is introduced into the sleeve. Thus, the position of the stop face device in the sleeve is defined by the projection 96, and the stop face device has an engagement surface for the free end surface of the pipe end portion whereby the pipe end portion 2 is defined with regard to its position in the sleeve. After the pipe end portion 2 has been introduced into the sleeve the stop face device is removed therefrom. The space between the projection 96 and the end surface of the pipe end portion 2 can thereupon be filled by means of a material 98 providing a flat inner surface of the pipe coupling which material does not prevent that the pipe end portion 2 is displaced further into the sleeve 82 as a consequence of ground movements. The material 98 can for example consist of cellular plastic. If desired, the material 98 can be positioned only at the bottom of the manhole and can in this case for example consist of some polyurethane mass.

The invention can be modified within the scope of the following claims. It is for example possible to provide the sleeves included in the pipe coupling with some kind of peripherally extending support so as to maintain the concentric position of the pipe end portion 2 in the sleeve. These supports can consist of loose inserts which are adapted to different diameters of the pipe end portion at one and the same sleeve.

## Claims

1. A pipe coupling for connecting a pipe end portion (2) to a wall (4) provided with a bore (6), for example a manhole wall consisting of concrete, **characterized** in that the pipe coupling comprises a substantially rigid sleeve (8; 30; 60; 82) provided with an outer surface connected with the bore (6) in the wall (4) and an inner surface connected with the pipe end portion (2), sealing devices (20, 24; 46, 50; 68, 74, 76; 84, 86) being positioned between the outer surface of the sleeve and the surface defining the bore on one hand and between the inner surface of the sleeve and the outer surface of the pipe end portion on the other hand.

2. A pipe coupling as claimed in claim 1, **characterized** in that the pipe end portion (2) is adapted to be axially displaceable in the sleeve (8; 30; 60; 82).

3. A pipe coupling as claimed in claim 1 or 2, **characterized** by a stop face device (28; 52; 78) positioned in the sleeve (8; 30; 60; 82) for determining the position of the pipe end portion in the sleeve in the axial direction when the pipe end portion (2) is introduced into the sleeve.

4. A pipe coupling as claimed in claim 3, **characterized** in that the stop face device (28; 52; 78) is adapted to be inactivated subsequently to the determination of the position of the pipe end portion (2) in the sleeve (8; 30; 60; 82).

5. A pipe coupling as claimed in claim 4, **characterized** in that the stop face device (28; 52; 78) is constituted by an annular element which subsequently to the determination of the position of the pipe end portion (2) in the sleeve (8; 30; 60; 82) is removable therefrom.

6. A pipe coupling as claimed in any of the preceding claims, **characterized** in that the sleeve (8; 30; 60; 82) is in at least one axial direction fixed in the bore (6) in the wall (4).

7. A pipe coupling as claimed in claim 6, **characterized** in that the sleeve (8; 30; 60; 82) supports a portion (18; 36, 38; 66, 70; 88) engaging the surface of the wall (4) surrounding the bore (6) at one side of the wall.

8. A pipe coupling as claimed in claim 7, **characterized** in that the portion engaging the surface of the wall (4) surrounding the bore (6) at one side of the wall is constituted by an edge flange (36) on the sleeve (30).

9. A pipe coupling as claimed in claim 7 or 8, **characterized** in that the portion engaging the surface of the wall (4) surrounding the opening (6) at one side of the wall is constituted by an annular, projecting portion (66; 88) of the sealing device (68; 84) positioned between the outer surface of the sleeve (60; 82) and the surface defining the bore (6) in the wall (4).

10. A pipe coupling as claimed in claim 9, **characterized** in that the annular, projecting portion (66; 88) of the sealing device (68; 84) is supported by an edge flange (65; 90) on the sleeve (60; 82).

11. A pipe coupling as claimed in claim 6, **characterized** in that the sleeve (30; 60) is in both axial directions fixed in the bore (6) in the wall (4).

12. A pipe coupling as claimed in claim 11, **characterized** in that the sleeve (8; 30; 60) is at least at one side of the wall (4) fixed in the bore (6) in the wall by means of a locking ring positioned between a shoulder (16; 40; 72) on the sleeve and the surface of the wall surrounding the bore.

13. A pipe coupling as claimed in claim 12, **characterized** in that the locking ring (18; 38; 70) is open and consists of an elastic material and is in the radial direction positionable and removable from the position between the shoulder (16; 40; 72) and the surface of the wall surrounding the bore.

14. A pipe coupling as claimed in claim 12 or 13, **characterized** in that the sleeve (30; 72) is from one side of the wall introducable into the bore to a position in which a portion (36; 66) supported by the sleeve engages the surface surrounding the bore at said one side of the wall (4) and is thereupon fixable in said position by positioning the locking ring (38; 70) at the other side of the wall.

15. A pipe coupling as claimed in any of claims 12-14, **characterized** in that the sleeve (30) is provided with two or several shoulders (40, 42) positioned at an axial distance from each other and adapted to engage the locking ring (40) so as to make it possible to connect the sleeve (30) to walls (4) of different thicknesses.

16. A pipe coupling as claimed in any of the preceding claims, **characterized** in that the sleeve is adapted to be provided with sealing devices (20, 24; 46, 50; 68, 74, 76; 84, 86) of different radial dimensions so as to make it possible to connect pipe end portions (2) of different diameters to openings (6) of different diameters while using one and the same sleeve.

17. A pipe coupling as claimed in any of the preceding claims, **characterized** in that the sealing device (86) positioned between the inner surface of the sleeve and the outer surface of the pipe end portion is fixed in relation to the sleeve by means of grooves, rims or other irregularities (94) provided at the inner surface of the sleeve.
